# EUROPEAN PATENT APPLICATION

(11) **EP 4 610 582 A1**
(43) Date of publication of application: **03.09.2025**
(21) Application number: 23885524.1
(22) Date of filing: 17.10.2023
(51) Int. Cl.: F25D 11/00, F25B 49/02, F25D 29/00

(54) **CONTROL SYSTEM, MOVING BODY, CONTROL METHOD, AND CONTROL PROGRAM**

(30) Priority: 04.11.2022 JP 2022177431
(71) Applicant: Mitsubishi Heavy Industries Thermal Systems, Ltd., Tokyo 100-8332 (JP)
(72) Inventor: MARUTA, Yosuke, Tokyo 100-8332 (JP); HASHIZUME, Yoshihiro, Tokyo 100-8332 (JP)
(74) Representative: Cabinet Beau de Loménie
(86) International application number: PCT/JP2023/037544
(87) International publication number: WO 2024/095762

(57) **Abstract**

Provided are a control system, a moving body, a control method, and a control program capable of reliably detecting leakage of a refrigerant. A control system (50) applied to a refrigeration unit that is provided in a moving body and that cools the interior of a cargo compartment of the moving body comprises: a gas detecting unit (51) that is installed in the cargo compartment, in which an evaporator of the refrigeration unit is provided, and that acquires a gas detection value of a refrigerant sensor for detecting leakage of a gas including a refrigerant gas; an operating state detecting unit (52) which acquires operating state detected values of at least two of a low pressure sensor which is provided in the refrigeration unit to detect a low pressure of the refrigerant on an outlet side of the evaporator, a high pressure sensor for detecting a high pressure of the refrigerant on an outlet side of a compressor of the refrigeration unit, and an evaporator outlet temperature sensor for detecting an outlet temperature of the evaporator; and a determining unit (53) for determining, on the basis of the gas detection value and the operating state detected values, whether a medium that has leaked into the cargo compartment is the refrigerant gas.

## Description

### Technical Field

The present disclosure relates to a control system, a moving body, a control method, and a control program.

### Background Art

In a refrigeration unit, particularly a transport refrigeration unit, in order to realize a low global warming potential (GWP), a refrigerant having combustibility (mild-flammability) may be used. The transport refrigeration unit cools a cargo compartment (cold storage) having high confidentiality, and there is a concern that when a refrigerant leaks into the cargo compartment, the refrigerant may combust. Therefore, it is necessary to appropriately detect leakage of the refrigerant. PTL 1 discloses that either refrigerant leakage detecting means installed in a vicinity of a high-pressure pipe or refrigerant leakage detecting means installed in a refrigeration chamber and a freezing chamber detects leakage of a refrigerant. In addition, it is disclosed that the leakage of the refrigerant is detected by using a temperature sensor of an inlet pipe of an evaporator or a pressure sensor of the inlet pipe of the evaporator instead of the refrigerant leakage detecting means.

### Citation List

### Patent Literature

[PTL 1] Japanese Unexamined Patent Application Publication No. 2001-116419

### Summary of Invention

### Technical Problem

However, in the invention of PTL 1, a case where another gas other than the refrigerant is generated has not been studied. For detecting the leakage of the refrigerant only with a refrigerant sensor, it is possible to realize the detection by using a highly accurate refrigerant sensor, but a very expensive sensor is required. In a case of a low-cost refrigerant sensor, a refrigerant gas and the other gas cannot be distinguished from each other, and thus the other gas is erroneously detected. It is difficult to distinguish whether the leakage of the refrigerant occurs inside or outside the cargo compartment using the temperature sensor of the inlet pipe of the evaporator and the pressure sensor of the inlet pipe of the evaporator.

The present disclosure has been made in view of such circumstances, and an object thereof is to provide a control system, a moving body, a control method, and a control program that can reliably detect leakage of a refrigerant.

### Solution to Problem

In order to achieve the above-described object, a control system, a moving body, a control method, and a control program of the present disclosure employ the following means.

A control system in some embodiments of the present disclosure is a control system applied to a refrigeration unit that is provided in a moving body and that cools an inside of a cargo compartment of the moving body, the control system including: a gas detecting unit that acquires a gas detection value of a refrigerant sensor which is installed in the cargo compartment, in which an evaporator of the refrigeration unit is provided, and which detects leakage of a gas including a refrigerant gas; an operating state detecting unit that acquires operating state detection values of any two of a low pressure sensor which detects a low pressure of a refrigerant on an outlet side of the evaporator, a high pressure sensor which detects a high pressure of a refrigerant on an outlet side of a compressor of the refrigeration unit, and an evaporator outlet temperature sensor which detects an outlet temperature of the evaporator, the low pressure sensor, the high pressure sensor, and the evaporator outlet temperature sensor being provided in the refrigeration unit; and a determining unit that determines whether a leakage medium into the cargo compartment is the refrigerant gas, based on the gas detection value and the operating state detection value.

A moving body in some embodiments of the present disclosure includes a cargo compartment, a refrigeration unit provided in the cargo compartment, and the control system.

A control method in some embodiments of the present disclosure is a control method applied to a refrigeration unit that is provided in a moving body and that cools an inside of a cargo compartment of the moving body, the method being executed by a computer mounted on the refrigeration unit and including: a refrigerant detection step of acquiring a refrigerant detection value of a refrigerant sensor which is installed in the cargo compartment, in which an evaporator of the refrigeration unit is provided, and which detects a refrigerant; an operating state detection step of acquiring operating state detection values of any two of a low pressure sensor which detects a low pressure of a refrigerant on an outlet side of the evaporator, a high pressure sensor which detects a high pressure of a refrigerant on an outlet side of a compressor of the refrigeration unit, and an evaporator outlet temperature sensor which detects an outlet temperature of the evaporator, the low pressure sensor, the high pressure sensor, and the evaporator outlet temperature sensor being provided in the refrigeration unit; and a determination step of determining whether a leakage medium into the cargo compartment is a refrigerant gas, based on the refrigerant detection value and the operating state detection value.

A control program in some embodiments of the present disclosure causes a computer to execute the control method.

### Advantageous Effects of Invention

According to the present disclosure, it is possible to reliably detect leakage of a refrigerant and improve safety of a refrigeration unit.

### Brief Description of Drawings

Fig. 1 is a perspective view showing a schematic configuration of a truck according to an embodiment of the present disclosure.
Fig. 2 is a diagram showing an example of a refrigerant circuit of a refrigeration unit according to the embodiment of the present disclosure.
Fig. 3 is a diagram showing an example of a hardware configuration of a control system according to the embodiment of the present disclosure.
Fig. 4 is a functional block diagram showing functions included in the control system according to the embodiment of the present disclosure.
Fig. 5 is a diagram showing a relationship between a refrigerant superheating degree and a refrigerant amount and a relationship between a low pressure and the refrigerant amount according to the embodiment of the present disclosure.
Fig. 6 is a diagram showing the relationship between the refrigerant superheating degree and the refrigerant amount and a relationship between a high pressure and the refrigerant amount according to the embodiment of the present disclosure.
Fig. 7 is a diagram showing the relationship between the low pressure and the refrigerant amount and the relationship between a high pressure and the refrigerant amount according to the embodiment of the present disclosure.
Fig. 8 is a diagram showing determination based on a gas detection value and an operating state detection value according to the embodiment of the present disclosure.
Fig. 9 shows control flow of the control system according to the embodiment of the present disclosure.
Fig. 10 shows the control flow of the control system according to the embodiment of the present disclosure.
Fig. 11 is a diagram showing an example of refrigerant sensor installation according to the embodiment of the present disclosure.

### Description of Embodiments

Hereinafter, a control system, a moving body, a control method, and a control program according to an embodiment of the present disclosure will be described with reference to the drawings.

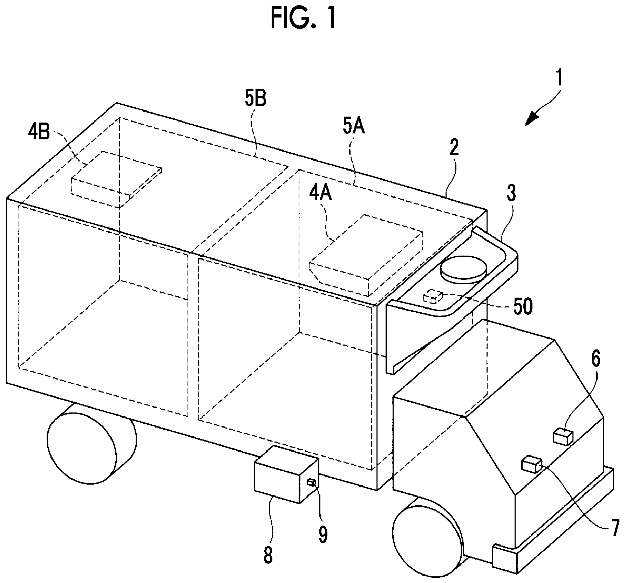

Fig. 1 is a diagram (perspective view) showing a schematic configuration of a truck 1 according to an embodiment of the present disclosure. In the present embodiment, the truck 1, which is a vehicle, is exemplified and described as the moving body, but the moving body is not limited to the truck 1. As shown in Fig. 1, the truck 1 has a cargo compartment 2 behind the driver's cabin. The cargo compartment 2 has a box shape and can load cargo inside, and the temperature can be managed by a refrigeration unit. In the present embodiment, the cargo compartment 2 of the truck 1 is divided into a region 5A and a region 5B, and cargo can be loaded in each region. In addition, temperature management is possible in each region. The regions may be divided into three or more regions instead of two regions as in the present embodiment, or may be one region.

A condenser unit (condensation unit) 3, an evaporator unit (evaporation unit) 4A in the region 5A, and an evaporator unit (evaporation unit) 4B in the region 5B are mounted on the truck 1. The evaporator units 4A and 4B are respectively provided in the cargo compartment 2, particularly in an upper portion of the cargo compartment 2. A cabin controller 6 is provided in the driver's cabin of the truck 1, and the freezing states of the region 5A and the region 5B can be operated. The refrigeration unit is provided with a control system 50 (to be described later).

A battery 8 may be mounted on the truck 1. The battery 8 may be capable of storing or discharging power via, for example, a connector unit 9. For example, the battery 8 can adopt Li-ion, Ni-MH, a capacitor, a lead storage battery, or the like. The battery 8 may be provided on a truck 1 side, may be provided on a refrigeration unit side, or may be provided on other vehicle-attached articles.

The truck 1 may be equipped with a device capable of generating power, such as an alternator 7.

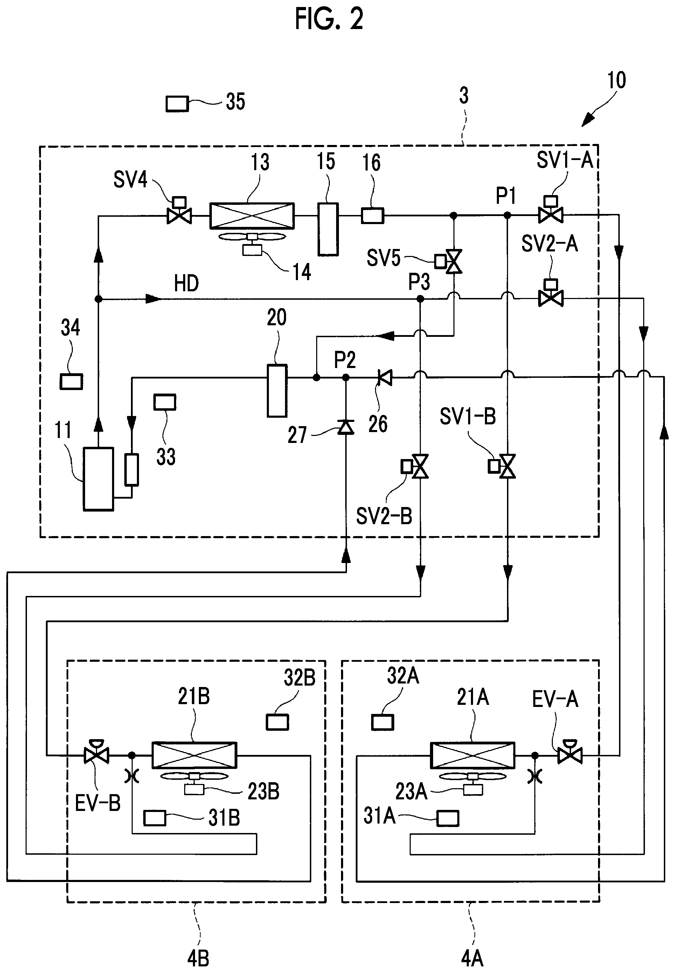

Fig. 2 is a diagram showing an example of a refrigerant circuit 10 of the refrigeration unit mounted on the truck 1. The refrigerant circuit 10 in Fig. 2 is merely an example, and the refrigerant circuit 10 having another configuration may be mounted on the truck 1.

As shown in Fig. 2, the two evaporator units 4A and 4B are connected to the condenser unit 3.

In the condenser unit 3, the high-temperature and high-pressure refrigerant compressed by a compressor 11 is supplied to a condenser 13 via a valve SV4. In the condenser 13, the refrigerant exchanges heat with air flowing through a fan 14, and releases heat to be condensed. The refrigerant branches at P1 via a receiver 15 and a dryer 16. One refrigerant that has branched at P1 is supplied to the evaporator unit 4A installed in the region 5A via a valve SV1-A. In the evaporator unit 4A, the refrigerant is expanded by an expansion valve EV-A to be a low-temperature and low-pressure refrigerant. The refrigerant is supplied to an evaporator 21A. In the evaporator 21A, the refrigerant exchanges heat with air flowing through a fan 23A, and absorbs heat and evaporates. In this way, the air in the region 5A is cooled. The evaporated refrigerant merges with the refrigerant from the evaporator unit 4B in the region 5B at P2 via a check valve 26, and flows into the compressor 11 via an accumulator 20.

Meanwhile, the other refrigerant that has branched at P1 is supplied to the evaporator unit 4B installed in the region 5B via a valve SV1-B. In the evaporator unit 4B, the refrigerant is expanded by an expansion valve EV-B to be a low-temperature and low-pressure refrigerant. The refrigerant is supplied to an evaporator 21B. In the evaporator 21B, the refrigerant exchanges heat with air flowing through a fan 23B, and absorbs heat and evaporates. In this way, the air in the region 5B is cooled. The evaporated refrigerant merges with the refrigerant from the evaporator unit 4A in the region 5A at P2 via a check valve 27, and flows into the compressor 11 via the accumulator 20.

In this way, the refrigeration cycle is configured, and the air in the cargo compartment 2 is cooled.

As shown in Fig. 2, a line that bypasses the upstream side of P1 and the downstream side of P2 and a valve SV5 provided in the line may be disposed. In addition, a drain pan heater of the evaporator unit that uses a part of the high-temperature and high-pressure refrigerant compressed by the compressor 11 may be disposed. Specifically, a part of the high-temperature and high-pressure refrigerant compressed by the compressor 11 is caused to flow to a line HD and branches at P3. One refrigerant that has branched at P3 is supplied to the drain pan heater of the evaporator unit 4A in the region 5A via a valve SV2-A. The drain pan heater heats the drain pan. Thereafter, the refrigerant is supplied to the upstream side of the evaporator 21A. The other refrigerant that has branched at P3 is supplied to the drain pan heater of the evaporator unit 4B in the region 5B via a valve SV2-B. Thereafter, the refrigerant is supplied to the upstream side of the evaporator 21B.

A refrigerant sensor 31A is installed in the vicinity of the evaporator 21A of the evaporator unit 4A. Similarly, a refrigerant sensor 31B is installed in the vicinity of the evaporator 21B of the evaporator unit 4B. The refrigerant sensors 31A and 31B are sensors that detect leakage of a gas including a refrigerant gas.

An evaporator outlet temperature sensor 32A is installed on a refrigerant flow outlet side of the evaporator 21A of the evaporator unit 4A. Similarly, An evaporator outlet temperature sensor 32B is installed on a refrigerant flow outlet side of the evaporator 21B of the evaporator unit 4B. The evaporator outlet temperature sensors 32A and 32B detect the refrigerant temperature on the outlet side of the evaporator 21A or 21B.

A low pressure sensor 33 is installed on a refrigerant flow inlet side of the compressor 11 of the condenser unit 3. A high pressure sensor 34 is installed on a refrigerant flow outlet side of the compressor 11. The low pressure sensor 33 detects the low pressure of the refrigerant on the outlet side of the evaporators 21A and 21B. The high pressure sensor 34 detects the high pressure of the refrigerant after being compressed by the compressor 11 on the outlet side of the compressor 11. In the present embodiment, the evaporator outlet temperature sensors 32A and 32B, the low pressure sensor 33, and the high pressure sensor 34 are collectively referred to as an operating point sensor.

An outside air temperature sensor 35 is installed in the vicinity of the condenser 13 of the condenser unit 3. The outside air temperature sensor 35 detects an outside air temperature of the cargo compartment 2. The installation position of the outside air temperature sensor 35 may be any position of the truck 1 as long as the position is a position which is outside the cargo compartment 2 and at which the outside air temperature can be stably detected.

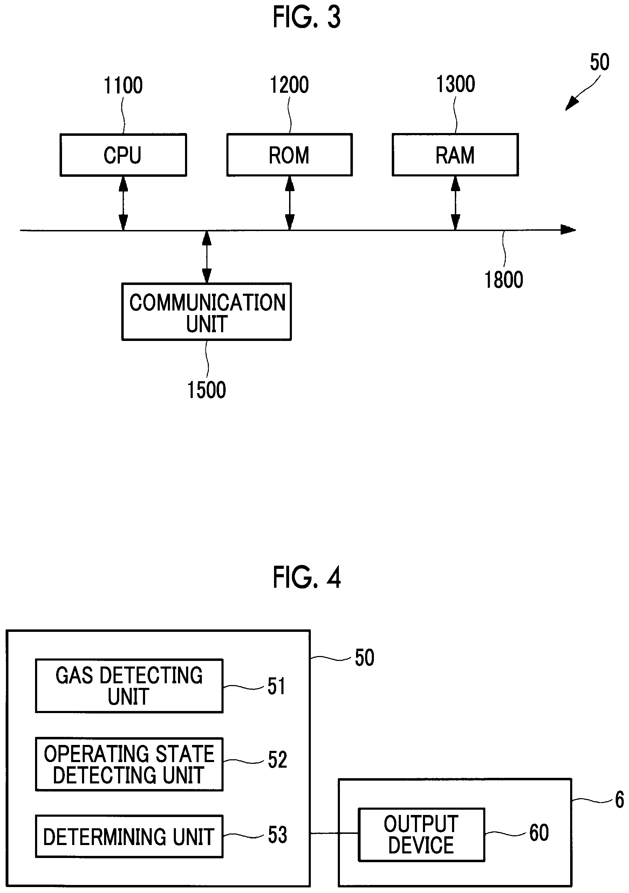

Fig. 3 is a diagram showing an example of a hardware configuration of the control system in some embodiments of the present disclosure.

As shown in Fig. 3, the control system 50 is a computer system and includes, for example, a central processing unit (CPU: processor) 1100, a secondary storage (ROM: memory) 1200, a main memory (RAM) 1300, and a communication unit 1500 for connecting to a network or the like. Each of these units is connected through a bus 1800. In the present embodiment, the control system 50 is provided in the refrigeration unit.

The CPU 1100 performs control of the entire control system 50 by an operating system (OS) stored in the secondary storage 1200 connected via the bus 1800, for example, and performs various processing by executing various programs stored in the secondary storage 1200. One or a plurality of CPUs 1100 may be provided and implement the processing in cooperation with each other.

For example, the main memory 1300 is configured with a writable memory such as a cache memory or a random-access memory (RAM) and is used as a work area for operations such as reading execution programs of the CPU 1100 and writing processing data of the execution programs.

The secondary storage 1200 is a non-transitory computer-readable storage medium. The secondary storage 1200 is, for example, a magnetic disk, a magneto-optical disk, a CD-ROM, a DVD-ROM, a semiconductor memory, or the like. Examples of the secondary storage 1200 include a read-only memory (ROM), a hard disk drive (HDD), a solid-state drive (SSD), a flash memory, and the like. The secondary storage 1200 stores, for example, an OS for controlling an entire information processing device, such as Windows (registered trademark), iOS (registered trademark), and Android (registered trademark), a basic input/output system (BIOS), various device drivers for hardware operations of peripheral devices, various types of application software, various pieces of data and files, and the like. Additionally, the secondary storage 1200 stores a program for implementing various types of processing and various pieces of data required to implement the various types of processing. A plurality of secondary storages 1200 may be provided, and the program and the data as mentioned above may be divided and stored across each of the secondary storages 1200.

Fig. 4 is a diagram showing an example of a function of the control system in some embodiments of the present disclosure.

As shown in Fig. 4, the control system 50 includes a gas detecting unit 51, an operating state detecting unit 52, and a determining unit 53. In addition, an output device 60 provided in the cabin controller 6 is connected to the control system 50. In particular, the control system 50 detects whether the refrigerant of the refrigeration unit is leaking.

A series of processes for implementing functions of the control system 50 is stored in the secondary storage 1200 (refer to Fig. 3) or the like in the form of a program as an example, and the CPU (processor) 1100 (refer to Fig. 3) reads the program into the main memory 1300 (refer to Fig. 3) to execute information processing and calculation processing, thereby implementing various functions. The program may be provided in various forms, such as being installed in the secondary storage 1200 in advance, stored in another non-transitory computer-readable storage medium, or distributed through wired or wireless communication means. Examples of the non-transitory computer-readable storage medium include a magnetic disk, a magneto-optical disk, a CD-ROM, a DVD-ROM, a semiconductor memory, and the like.

The gas detecting unit 51 shown in Fig. 4 acquires a gas detection value for detecting the leakage of the gas including the refrigerant gas from the refrigerant sensors 31A and 31B. In a case where the refrigerant sensors 31A and 31B are low-cost sensors, the refrigerant sensors 31A and 31B may detect other gases such as a miscellaneous gas other than the refrigerant gas. Of the cargo loaded in the cargo compartment 2, there is cargo that generates a gas such as ethylene, which reacts to the refrigerant sensor, such as fruits and vegetables. In this way, the gas generated from the cargo is collectively referred to as a miscellaneous gas. There is also a sensor that detects only the miscellaneous gas, but the sensor is a very expensive sensor, and since it is an optical system sensor, it is weak against vibration and is not suitable for a transport refrigeration unit.

In a case where the operating state detecting unit 52 detects the refrigerant leakage in the region 5A, the operating state detecting unit 52 acquires operating state detection values from any two sensors among the low pressure sensor 33, the high pressure sensor 34, and the evaporator outlet temperature sensor 32A, which are operating point sensors. The refrigerant leakage in the region 5B can be detected by using the evaporator outlet temperature sensor 32B instead of the evaporator outlet temperature sensor 32A. The operating state detection value of the low pressure sensor 33 is a low pressure of the refrigerant. The operating state detection value of the high pressure sensor 34 is a high pressure of the refrigerant. The operating state detection value of the evaporator outlet temperature sensor 32A is the refrigerant temperature on the refrigerant flow outlet side of the evaporator 21A, and the operating state detection value of the evaporator outlet temperature sensor 32B is the refrigerant temperature on the refrigerant flow outlet side of the evaporator 21B.

The operating state detecting unit 52 calculates the saturation temperature of the refrigerant from the low pressure, and calculates the refrigerant superheating degree from the difference between the saturation temperature and the evaporator outlet temperature.

The determining unit 53 determines whether the medium that has leaked into the cargo compartment 2 is a refrigerant gas, based on the gas detection value acquired by the gas detecting unit 51 and the operating state detection value acquired by the operating state detecting unit 52, by using the gas detection value and the operating state detection value.

The output device 60 provided in the cabin controller 6 outputs the determination result of the leakage of the refrigerant of the refrigeration unit by the control system 50. The output device 60 may be in a form in which the user can be notified of the determination result, and the output form may be a display, a speaker, a lamp, or the like.

The determining unit 53 determines the operating state of the refrigeration unit depending on the type of the operating state detection value acquired by the operating state detecting unit 52.

### [Determination Using Evaporator Outlet Temperature and Low pressure]

The determining unit 53 uses the low pressure, which is the operating state detection value acquired by the operating state detecting unit 52, and the refrigerant superheating degree calculated from the evaporator outlet temperature. The determining unit 53 determines that the refrigerant is leaking in a case where the refrigerant superheating degree increases and exceeds a predetermined superheating degree threshold value and the low pressure decreases and falls below a predetermined low-pressure threshold value.

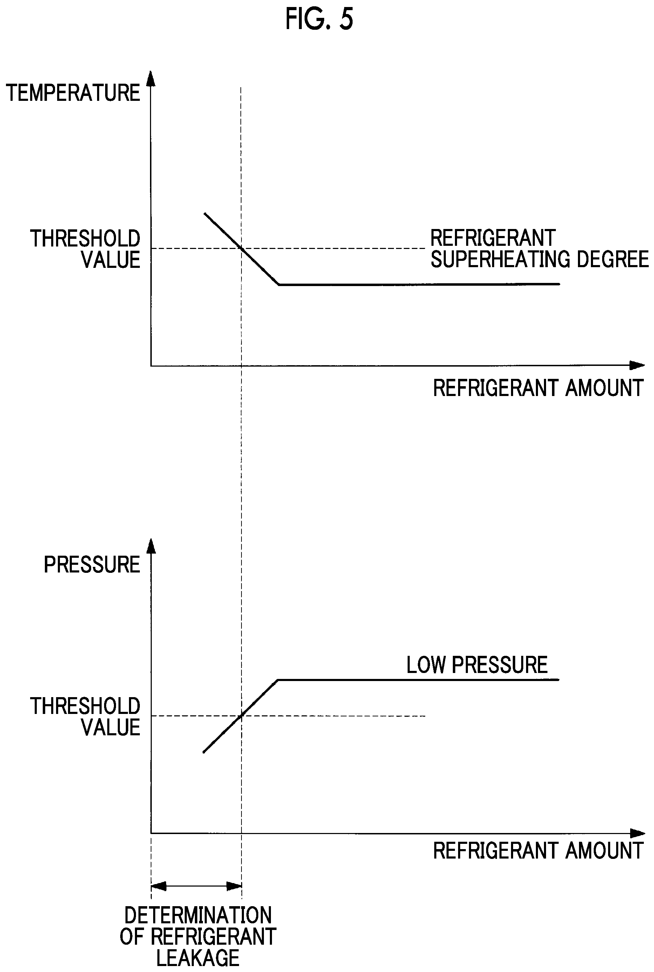

Fig. 5 shows a relationship between the refrigerant superheating degree and a refrigerant amount and a relationship between the low pressure and the refrigerant amount according to the embodiment of the present disclosure.

The vertical axis of the graph of the refrigerant superheating degree in Fig. 5 represents the temperature, and the horizontal axis represents the refrigerant amount. In addition, the vertical axis of the graph of the low pressure represents the pressure, and the horizontal axis represents the refrigerant amount. As shown in Fig. 5, the refrigerant superheating degree increases when the refrigerant amount is equal to or less than a certain amount. In addition, the low pressure decreases when the refrigerant amount is equal to or less than a certain amount. As described above, the refrigerant superheating degree is calculated from the difference between the saturation temperature of the refrigerant, which is calculated from the low pressure, and the evaporator outlet temperature. Therefore, when the pressure decreases, the saturation temperature decreases, and when the evaporator outlet temperature is constant, the refrigerant superheating degree increases. Therefore, the superheating degree threshold value is set to the refrigerant superheating degree and the low-pressure threshold value is set to the low pressure, and it is determined that the refrigerant is leaking in a case where the refrigerant superheating degree increases and exceeds a predetermined superheating degree threshold value and the low pressure decreases and falls below a predetermined low-pressure threshold value.

### [Determination Using Evaporator Outlet Temperature and High pressure]

The determining unit 53 uses the low pressure, which is the operating state detection value acquired by the operating state detecting unit 52, and the refrigerant superheating degree calculated from the evaporator outlet temperature. The determining unit 53 determines that the refrigerant is leaking in a case where the refrigerant superheating degree increases and exceeds a predetermined superheating degree threshold value and the high pressure decreases and falls below a predetermined high-pressure threshold value.

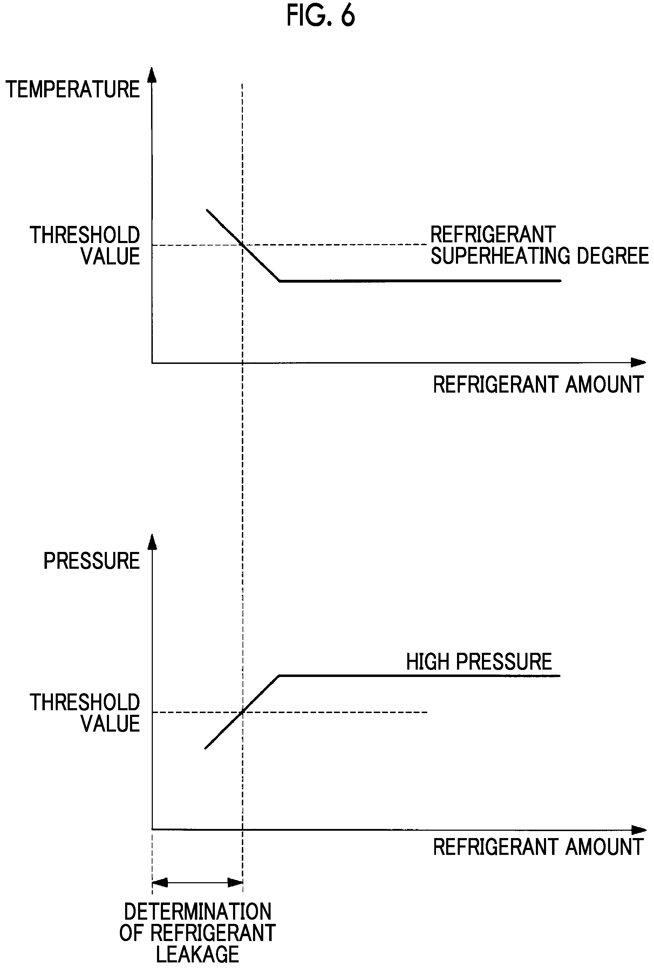

Fig. 6 shows the relationship between the refrigerant superheating degree and the refrigerant amount and a relationship between the high pressure and the refrigerant amount according to the embodiment of the present disclosure.

The vertical axis of the graph of the refrigerant superheating degree in Fig. 6 represents the temperature, and the horizontal axis represents the refrigerant amount. In addition, the vertical axis of the graph of the high pressure represents the pressure, and the horizontal axis represents the refrigerant amount. As shown in Fig. 6, the refrigerant superheating degree increases when the refrigerant amount is equal to or less than a certain amount. In addition, the high pressure decreases when the refrigerant amount is equal to or less than a certain amount. As described above, the refrigerant superheating degree is calculated from the difference between the saturation temperature of the refrigerant, which is calculated from the low pressure, and the evaporator outlet temperature. Therefore, when the pressure decreases, the saturation temperature decreases, and when the evaporator outlet temperature is constant, the refrigerant superheating degree increases. Therefore, the superheating degree threshold value is set to the refrigerant superheating degree and the high-pressure threshold value is set to the high pressure, and it is determined that the refrigerant is leaking in a case where the refrigerant superheating degree increases and exceeds a predetermined superheating degree threshold value and the high pressure decreases and falls below a predetermined high-pressure threshold value.

### [Determination Using Low pressure and High pressure]

The determining unit 53 uses the low pressure and the high pressure, which are the operating state detection values acquired by the operating state detecting unit 52. The determining unit 53 determines that the refrigerant is leaking in a case where the low pressure decreases and falls below a predetermined low-pressure threshold value and the high pressure decreases and falls below a predetermined high-pressure threshold value.

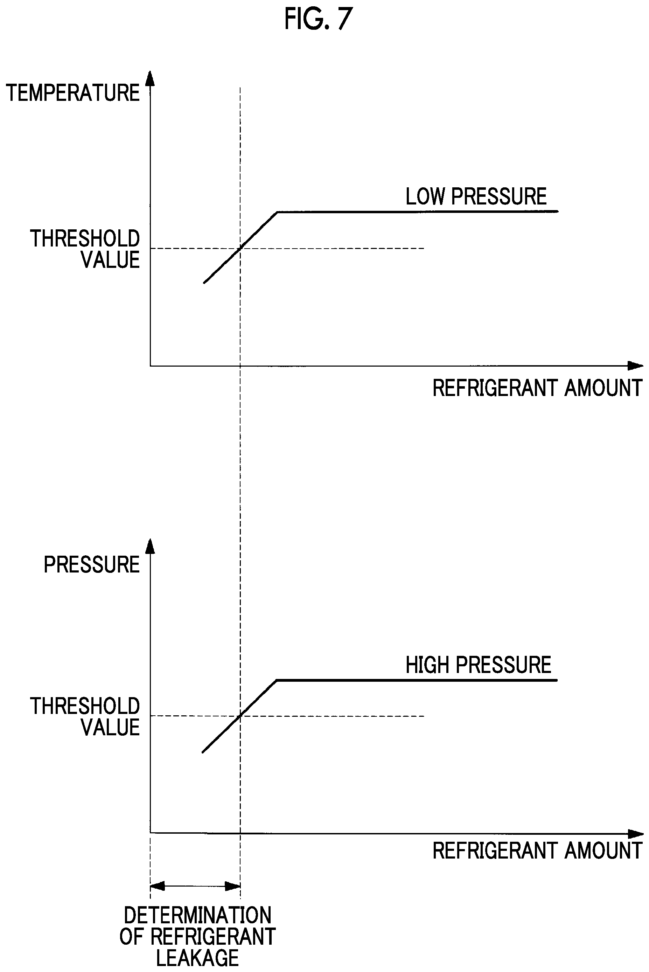

Fig. 7 shows the relationship between the low pressure and the refrigerant amount and the relationship between the high pressure and the refrigerant amount according to the embodiment of the present disclosure.

The vertical axis of the graph of the low pressure in Fig. 7 and of the graph of the high pressure represents the pressure, and the horizontal axis represents the refrigerant amount. As shown in Fig. 7, the low pressure decreases when the refrigerant amount is equal to or less than a certain amount. In addition, the high pressure decreases when the refrigerant amount is equal to or less than a certain amount. Therefore, the low-pressure threshold value is set to the low pressure and the high-pressure threshold value is set to the high pressure, and it is determined that the refrigerant is leaking in a case where the low pressure decreases and falls below a predetermined low-pressure threshold value and the high pressure decreases and falls below a predetermined high-pressure threshold value.

It is also possible to determine that the refrigerant is leaking only on a condition that the low pressure falls below a predetermined low-pressure threshold value. However, for example, in a case where the evaporator unit 4 is frosted and heat exchange cannot be performed, the low pressure may be reduced, and it is difficult to separate the events of the leakage of the refrigerant and the frosting. Therefore, by performing the determination in combination with the decrease in the high pressure, it is possible to separate the events and determine the leakage of the refrigerant.

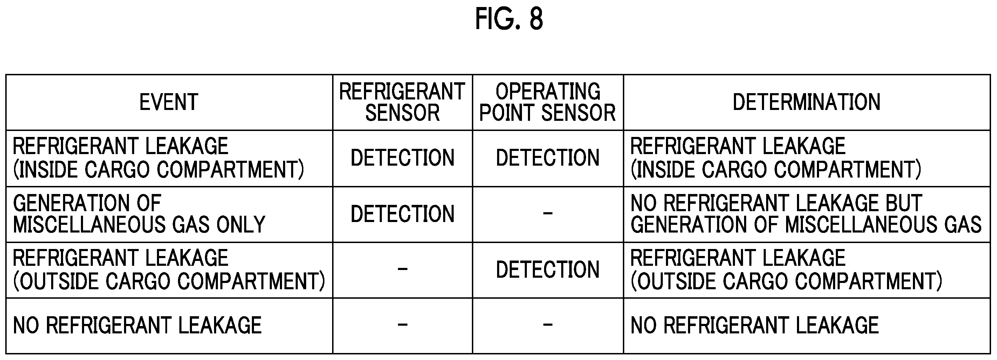

Fig. 8 is a diagram showing determination based on the gas detection value and the operating state detection value according to the embodiment of the present disclosure.

The determining unit 53 determines whether the medium that has leaked into the cargo compartment 2 is a refrigerant gas by using the determination shown in Fig. 8, based on the gas detection value acquired by the gas detecting unit 51 and the operating state detection value acquired by the operating state detecting unit 52 described above, by using the gas detection value and the operating state detection value.

As shown in Fig. 8, in a case where the gas detection value obtained by the refrigerant sensor detects the refrigerant leakage and the operating state detection value obtained by any one of the operating point sensors detects the refrigerant leakage, it is determined that the refrigerant leakage has occurred in the cargo compartment 2. In a case where refrigerant leakage occurs in the cargo compartment 2, ventilation of the cargo compartment 2 and repair of the refrigerant circuit 10 are required.

In a case where the gas detection value obtained by the refrigerant sensor detects the refrigerant leakage and the operating state detection value obtained by any one of the operating point sensors does not detect the refrigerant leakage, it is determined that the miscellaneous gas is generated on the assumption that there is no refrigerant leakage but the refrigerant sensor detects the miscellaneous gas. In a case where the miscellaneous gas is generated in the cargo compartment 2, the miscellaneous gas is flammable, and thus ventilation of the cargo compartment 2 is required.

In a case where the gas detection value obtained by the refrigerant sensor does not detect the refrigerant leakage and the operating state detection value obtained by any one of the operating point sensors detects the refrigerant leakage, it is determined that the refrigerant leakage has occurred outside the cargo compartment 2 although there is no refrigerant leakage in the cargo compartment 2. In a case where refrigerant leakage occurs outside the cargo compartment 2, repair of the refrigerant circuit 10 is required.

In a case where the gas detection value obtained by the refrigerant sensor does not detect the refrigerant leakage and the operating state detection value obtained by any one of the operating point sensors does not detect the refrigerant leakage, it is determined that the refrigerant leakage has not occurred. In this case, the response is not required.

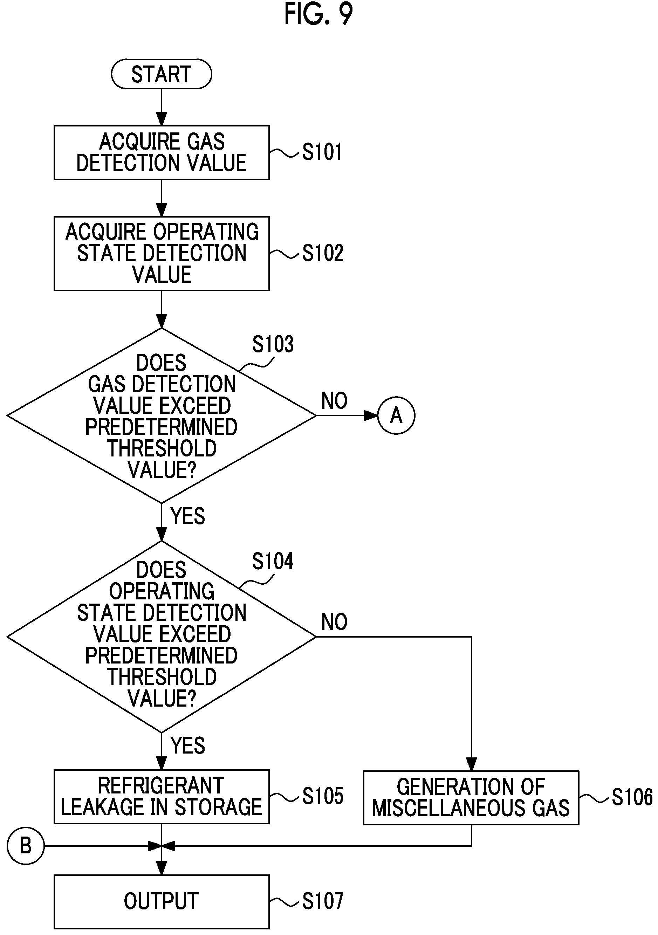

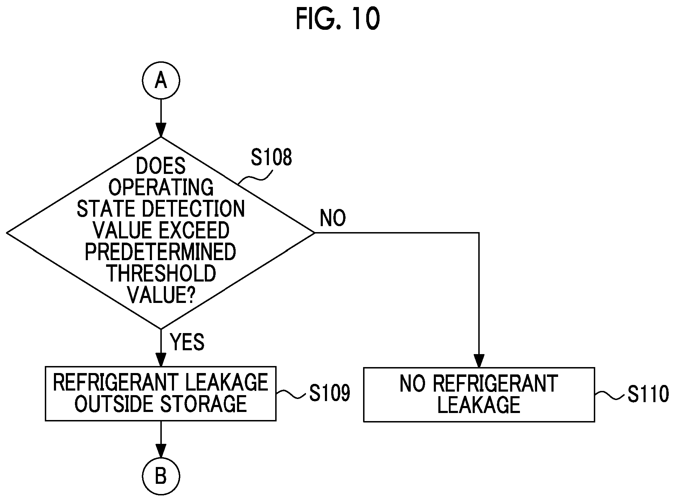

Figs. 9 and 10 show the control flow of the control system according to the embodiment of the present disclosure.

In step S101, the gas detecting unit 51 acquires the gas detection value.

In step S102, the operating state detecting unit 52 acquires the operating state detection value.

In step S103, the determining unit 53 determines whether the gas detection value exceeds a predetermined threshold value. Here, the predetermined threshold value is a threshold value at which it is determined that the gas detection value is leakage of the refrigerant. In a case where the gas detection value exceeds the predetermined threshold value (YES in S103), the process proceeds to step S104. In a case where the gas detection value does not exceed the predetermined threshold value (NO in S103), the process proceeds to A in Fig. 10.

In step S104, the determining unit 53 determines whether the operating state detection value exceeds a predetermined threshold value. Here, the predetermined threshold value is a threshold value of each operating state detection value, and is any one of the superheating degree threshold value, the low-pressure threshold value, and the high-pressure threshold value. In a case where the operating state detection value exceeds the predetermined threshold value (YES in S104), the process proceeds to step S105. In a case where the operating state detection value does not exceed the predetermined threshold value (NO in S104), the process proceeds to step S106.

In step S105, it is determined that refrigerant leakage has occurred in the cargo compartment 2 (inside the storage), and the output device 60 outputs that inside-the-storage refrigerant leakage has occurred (S107).

In step S106, it is determined that the miscellaneous gas has been generated in the cargo compartment 2 (inside the storage), and the output device 60 outputs that the miscellaneous gas has been generated (S107).

In step S103, in a case where the gas detection value does not exceed the predetermined threshold value (NO in S103), the process proceeds to A in Fig. 10, and the determining unit 53 determines whether the operating state detection value exceeds the predetermined threshold value (S108). In step S108, in a case where the operating state detection value exceeds the predetermined threshold value (YES in S108), the process proceeds to step S109. In a case where the operating state detection value does not exceed the predetermined threshold value (NO in S108), the process proceeds to step S110.

In step S109, it is determined that refrigerant leakage has occurred outside the cargo compartment 2 (outside the storage), the process proceeds to B in Fig. 9, and the output device 60 outputs that outside-the-storage refrigerant leakage has occurred (S107).

In step S110, it is determined that the refrigerant leakage has not occurred.

The determining unit 53 may further acquire the outside air temperature outside the cargo compartment 2 from the outside air temperature sensor 35. Each operating state detection value changes in accordance with a change in the outside air temperature. Therefore, the threshold value of each operating state detection value may be changed in accordance with the change in the outside air temperature acquired from the outside air temperature sensor 35.

In the present embodiment, the refrigerant sensors 31A and 31B are installed in the vicinity of the evaporators 21A and 21B of the evaporator units 4A and 4B, respectively. However, the refrigerant sensors 31A and 31B may be provided below the regions 5A and 5B inside the cargo compartment 2, respectively.

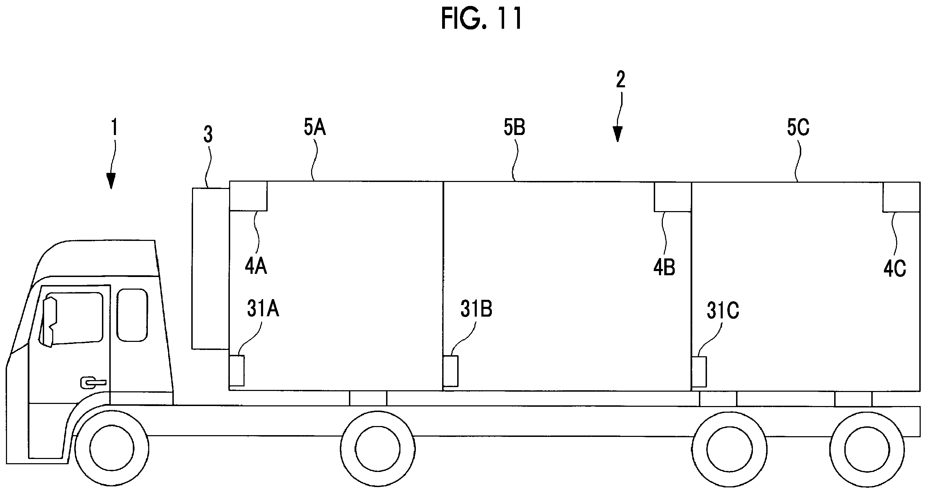

Fig. 11 shows an example of refrigerant sensor installation according to the embodiment of the present disclosure. In Fig. 11, the cargo compartment 2 is divided into three regions 5A, 5B, and 5C, and evaporator units 4A, 4B, and 4C are installed in the regions 5A, 5B, and 5C, respectively. As shown in Fig. 11, refrigerant sensors 31A, 31B, and 31C may be installed below each of the three divided regions 5A, 5B, and 5C inside the cargo compartment 2.

The refrigerant gas is heavier than air and tends to accumulate below the cargo compartment 2 in a case of leakage. However, the refrigerant gas can be detected at an early stage by the refrigerant sensors 31A, 31B, and 31C being provided below the regions 5A, 5B, and 5C inside the cargo compartment 2.

### <Supplementary Notes>

The control system, the moving body, the control method, and the control program described in the above-described embodiment are grasped as follows, for example.

A control system (50) according to a first aspect of the present disclosure is a control system applied to a refrigeration unit that is provided in a moving body (1) and that cools an inside of a cargo compartment (2) of the moving body, the control system including: a gas detecting unit (51) that acquires a gas detection value of a refrigerant sensor (31) which is installed in the cargo compartment, in which an evaporator (21) of the refrigeration unit is provided, and which detects leakage of a gas including a refrigerant gas; an operating state detecting unit (52) that acquires operating state detection values of any two of a low pressure sensor (33) which detects a low pressure of a refrigerant on an outlet side of the evaporator, a high pressure sensor (34) which detects a high pressure of a refrigerant on an outlet side of a compressor (11) of the refrigeration unit, and an evaporator outlet temperature sensor (32) which detects an outlet temperature of the evaporator, the low pressure sensor, the high pressure sensor, and the evaporator outlet temperature sensor being provided in the refrigeration unit; and a determining unit (53) that determines whether a leakage medium into the cargo compartment is the refrigerant gas, based on the gas detection value and the operating state detection value.

In addition to the gas detection value of the refrigerant sensor that detects the leakage of the gas including the refrigerant gas, it is determined whether the leakage medium into the cargo compartment is the refrigerant gas by using the operating state detection values of any two of the low pressure sensor, the high pressure sensor, and the evaporator outlet temperature sensor, so that the leakage of the refrigerant can be reliably detected and the safety of the refrigeration unit can be improved. In addition, it is possible to distinguish the detection by the refrigerant gas from the detection of the refrigerant sensor by another gas other than the refrigerant gas and to detect only the leakage of the refrigerant gas. Therefore, it is possible to prevent erroneous detection by the other gas other than the refrigerant gas using the refrigerant sensor.

In a control system according to a second aspect of the present disclosure, in the first aspect, the determining unit may determine whether the refrigerant gas is leaking outside the cargo compartment.

It is possible to detect the leakage of the refrigerant gas not only in the cargo compartment but also outside the cargo compartment based on the gas detection value and the operating state detection value, and it is possible to improve the safety of the refrigeration unit. In addition, the user can determine whether the leakage of the refrigerant gas has occurred inside or outside the cargo compartment, and the user can perform an appropriate response according to the occurrence location.

In a control system according to a third aspect of the present disclosure, in the first aspect or the second aspect, the determining unit may determine whether the leakage medium into the cargo compartment is a miscellaneous gas including an ethylene gas.

The inexpensive refrigerant sensor can distinguish the miscellaneous gas including the ethylene gas from the refrigerant gas and detect that the miscellaneous gas has been generated even in a case where the refrigerant sensor shows a response to the refrigerant gas and the miscellaneous gas including the ethylene gas. Therefore, the user can perform an appropriate response according to the leakage medium.

In a control system according to a fourth aspect of the present disclosure, in any one of the first aspect to the third aspect, the refrigerant sensor may be provided in a vicinity of the evaporator inside the refrigeration unit.

Since the refrigerant sensor is provided in the vicinity of the evaporator inside the refrigeration unit, the refrigerant sensor does not interfere with the load in the cargo compartment, so that the workability of the user is ensured and the load is not hindered.

In a control system according to a fifth aspect of the present disclosure, in any one of the first aspect to the third aspect, the refrigerant sensor may be provided below the cargo compartment on an outside of the refrigeration unit.

Since the refrigerant gas is heavier than air, in a case of leakage, the refrigerant gas tends to accumulate below the cargo compartment. The refrigerant sensor is provided below the cargo compartment, so that the refrigerant gas can be detected at an early stage.

In a control system according to a sixth aspect of the present disclosure, in any one of the first aspect to the fifth aspect, the determining unit may perform determination based on the low pressure and/or the high pressure in accordance with a change in an outside air temperature of the cargo compartment.

The pressure of the refrigerant changes in accordance with a change in the outside air temperature. However, the low pressure and/or the high pressure are detected in consideration of this. Therefore, even when the outside air temperature changes, appropriate determination can be made.

A moving body according to a seventh aspect of the present disclosure includes a cargo compartment, a refrigeration unit provided in the cargo compartment, and the control system of any one of the first aspect to the sixth aspect.

A control method (50) according to an eighth aspect of the present disclosure is a control method applied to a refrigeration unit that is provided in a moving body and that cools an inside of a cargo compartment of the moving body, the method being executed by a computer mounted on the refrigeration unit and including: a refrigerant detection step of acquiring a refrigerant detection value of a refrigerant sensor which is installed in the cargo compartment, in which an evaporator of the refrigeration unit is provided, and which detects a refrigerant; an operating state detection step of acquiring operating state detection values of any two of a low pressure sensor which detects a low pressure of a refrigerant on an outlet side of the evaporator, a high pressure sensor which detects a high pressure of a refrigerant on an outlet side of a compressor of the refrigeration unit, and an evaporator outlet temperature sensor which detects an outlet temperature of the evaporator, the low pressure sensor, the high pressure sensor, and the evaporator outlet temperature sensor being provided in the refrigeration unit; and a determination step of determining whether a leakage medium into the cargo compartment is a refrigerant gas, based on the refrigerant detection value and the operating state detection value.

A control program (50) according to a ninth aspect of the present disclosure is a control program for causing a computer to execute the control method of the eighth aspect.

### Reference Signs List

1: truck (moving body)
2: cargo compartment (cold storage)
3: condenser unit (condensation unit)
4A: evaporator unit (evaporation unit)
4B: evaporator unit (evaporation unit)
4C: evaporator unit (evaporation unit)
6: cabin controller
7: alternator
8: battery (storage battery)
9: connector unit
10: refrigerant circuit
11: compressor
13: condenser
14: fan
15: receiver
16: dryer
20: accumulator
21A: evaporator
21B: evaporator
23A: fan
23B: fan
26: check valve
27: check valve
31A: refrigerant sensor
31B: refrigerant sensor
31C: refrigerant sensor
32A: evaporator outlet temperature sensor
32B: evaporator outlet temperature sensor
33: low pressure sensor
34: high pressure sensor
35: outside air temperature sensor
50: control system
51: gas detecting unit
52: operating state detecting unit
53: determining unit
60: output device
1100: CPU
1200: ROM
1300: RAM
1500: communication unit
1800: bus
EV-A: expansion valve
EV-B: expansion valve
HD: line
SV1-A: valve
SV1-B: valve
SV2-A: valve
SV2-B: valve
SV4: valve
SV5: valve

## Claims

1. A control system applied to a refrigeration unit that is provided in a moving body and that cools an inside of a cargo compartment of the moving body, the control system comprising:
a gas detecting unit that acquires a gas detection value of a refrigerant sensor which is installed in the cargo compartment, in which an evaporator of the refrigeration unit is provided, and which detects leakage of a gas including a refrigerant gas;
an operating state detecting unit that acquires operating state detection values of any two of a low pressure sensor which detects a low pressure of a refrigerant on an outlet side of the evaporator, a high pressure sensor which detects a high pressure of a refrigerant on an outlet side of a compressor of the refrigeration unit, and an evaporator outlet temperature sensor which detects an outlet temperature of the evaporator, the low pressure sensor, the high pressure sensor, and the evaporator outlet temperature sensor being provided in the refrigeration unit; and
a determining unit that determines whether a leakage medium into the cargo compartment is the refrigerant gas, based on the gas detection value and the operating state detection value.

2. The control system according to Claim 1,
wherein the determining unit determines whether the refrigerant gas is leaking outside the cargo compartment.

3. The control system according to Claim 1,
wherein the determining unit determines whether the leakage medium into the cargo compartment is a miscellaneous gas including an ethylene gas.

4. The control system according to Claim 1,
wherein the refrigerant sensor is provided in a vicinity of the evaporator inside the refrigeration unit.

5. The control system according to Claim 1,
wherein the refrigerant sensor is provided below the cargo compartment on an outside of the refrigeration unit.

6. The control system according to Claim 1,
wherein the determining unit performs determination based on the low pressure and/or the high pressure in accordance with a change in an outside air temperature of the cargo compartment.

7. A moving body comprising:
a cargo compartment;
a refrigeration unit provided in the cargo compartment; and
the control system according to any one of Claims 1 to 6.

8. A control method applied to a refrigeration unit that is provided in a moving body and that cools an inside of a cargo compartment of the moving body, the method being executed by a computer mounted on the refrigeration unit and comprising:
a refrigerant detection step of acquiring a refrigerant detection value of a refrigerant sensor which is installed in the cargo compartment, in which an evaporator of the refrigeration unit is provided, and which detects a refrigerant;
an operating state detection step of acquiring operating state detection values of any two of a low pressure sensor which detects a low pressure of a refrigerant on an outlet side of the evaporator, a high pressure sensor which detects a high pressure of a refrigerant on an outlet side of a compressor of the refrigeration unit, and an evaporator outlet temperature sensor which detects an outlet temperature of the evaporator, the low pressure sensor, the high pressure sensor, and the evaporator outlet temperature sensor being provided in the refrigeration unit; and
a determination step of determining whether a leakage medium into the cargo compartment is a refrigerant gas, based on the refrigerant detection value and the operating state detection value.

9. A control program for executing the control method according to Claim 8.
